# EUROPEAN PATENT APPLICATION

(11) **EP 4 737 519 A1**
(43) Date of publication of application: **06.05.2026**
(21) Application number: 24845629.5
(22) Date of filing: 23.07.2024
(51) Int. Cl.: C08L 101/00, C08K 3/013, C08K 3/20, C08K 3/28, C08K 3/36, C08K 3/38

(54) **HEAT DISSIPATION FILLER, RESIN COMPOSITION, AND RESIN MOLDED BODY**

(30) Priority: 24.07.2023 JP 2023120257
(71) Applicant: U-MAP Co., Ltd., Nagoya-shi, Aichi 464-8601 (JP)
(72) Inventor: WATANABE, Shota, Nagoya-shi, Aichi 464-8601 (JP)
(74) Representative: Dr. Solf & Zapf Patent- und Rechtsanwalts PartG mbB
(86) International application number: PCT/JP2024/026356
(87) International publication number: WO 2025/023254

(57) **Abstract**

The heat dissipating filler of the present invention is a heat dissipating filler used for manufacturing a resin molded body, the heat dissipating filler comprising: first heat conductive particles each having a particle size of 10 µm or more and 150 µm or less; second heat conductive particles each having a particle size of 0.1 µm or more and less than 10 µm; and aluminum nitrides formed into a fibrous shape, wherein, when a total amount of the first heat conductive particles, the second heat conductive particles and the aluminum nitrides formed into the fibrous shape is 100 parts by volume, the heat dissipating filler contains the first heat conductive particles in a ratio of 30 parts by volume or more and 80 parts by volume or less, the second heat conductive particles in a ratio of 5 parts by volume or more and 50 parts by volume or less and the aluminum nitrides formed into the fibrous shape in a ratio of 1 part by volume or more and 40 parts by volume or less.

## Description

### TECHNICAL FIELD

The present invention relates to a heat dissipating filler, a resin composition, and a resin molded body.

### RELATED ART

Aluminum nitride (AIN) is an insulator with high heat conductivity and is therefore used as an insulating heat dissipating material for electronic devices. For example, AIN sintered bodies obtained by sintering AIN have a thermal expansion coefficient similar to that of silicon (Si), thereby making them suitable for use as heat sinks or substrates for silicon-based semiconductor devices. Meanwhile, use of particle-dispersed composite materials, such as resin molded bodies containing dispersed AIN particles, has also been proposed.

Adding insulating fillers such as spherical ceramics is known as a method for improving the heat conductivity of resin parts. To improve the heat conductivity, it is important to increase contact efficiency between the fillers and form a network (heat dissipating path) of the fillers.

For example, a resin molded body that has the heat conductivity, and moldability and processability has been proposed. Such a resin molded body contains an anisotropically shaped AIN filler formed into a fibrous, in which AIN single crystal particles are fused together to form the fibrous anisotropically shaped AIN filler, together with isotropically shaped particles (for example, see Patent Document 1).

Further, a resin composition made of an epoxy resin or a silicone resin containing AIN whiskers has been proposed, which suppresses the inclusion of impurities and thus the decrease in the heat conductivity (for example, see Patent Document 2).

In these resin molded bodies, by dispersing the AIN whiskers with a high aspect ratio in the resin molded body so that they are oriented in random directions along their length, contact density between the AIN whiskers can be increased, thereby imparting the high heat conductivity to the resin molded body.

However, it has been difficult to sufficiently suppress overall thermal resistance. Further, for example, when the resin molded body is formed into a sheet, even if an in-plane heat conductivity is excellent, it has not been possible to achieve sufficiently excellent heat conductivity in the thickness direction of the sheet.

### PRIOR ART DOCUMENT

### PATENT DOCUMENT

Patent document 1: JP-A-2010-235842
Patent document 2: JP-A-2016-145120

### SUMMARY OF THE INVENTION

### PROBLEM TO BE SOLVED BY THE INVENTION

It is an object of the present invention to provide a heat dissipating filler that can reduce overall thermal resistance and is suitable for use in production of a resin molded body that has excellent heat conductivity not only in an in-plane direction but also in a thickness direction. It is another object of the present invention to provide a resin composition that can reduce the overall thermal resistance and is suitable for use in the production of the resin molded body that has the excellent heat conductivity not only in the in-plane direction but also in the thickness direction. It is the other object of the present invention to provide the resin molded body that can reduce the overall thermal resistance and has the excellent heat conductivity not only in the in-plane direction but also in the thickness direction.

### MEANS FOR SOLVING THE PROBLEM

Such an object is achieved by the present inventions (1) to (12) described below.
(1) A heat dissipating filler used for manufacturing a resin molded body, the heat dissipating filler comprising:
   first heat conductive particles each having a particle size of 10 µm or more and 150 µm or less;
   second heat conductive particles each having a particle size of 0.1 µm or more and less than 10 µm; and
   aluminum nitrides formed into a fibrous shape,
   wherein, when a total amount of the first heat conductive particles, the second heat conductive particles and the aluminum nitrides formed into the fibrous shape is 100 parts by volume, the heat dissipating filler contains the first heat conductive particles in a ratio of 30 parts by volume or more and 80 parts by volume or less, the second heat conductive particles in a ratio of 5 parts by volume or more and 50 parts by volume or less and the aluminum nitrides formed into the fibrous shape in a ratio of 1 part by volume or more and 40 parts by volume or less.
(2) The heat dissipating filler described in the above-mentioned item (1), wherein the first heat conductive particles contain at least one selected from the group consisting of aluminum nitride, boron nitride and alumina.
(3) The heat dissipating filler described in the above-mentioned item (1) or (2), wherein the second heat conductive particles contain at least one selected from the group consisting of aluminum nitride, alumina and silica.
(4) The heat dissipating filler described in any one of the above-mentioned items (1) to (3), wherein a length in a long axis direction of the aluminum nitrides formed into the fibrous shape is 1.0 µm or more and 5.0 cm or less.
(5) The heat dissipating filler described in any one of the above-mentioned items (1) to (4), wherein a length in a short axis direction of the aluminum nitrides formed into the fibrous shape is 0.5 µm or more and 50.0 µm or less.
(6) The heat dissipating filler described in any one of the above-mentioned items (1) to (5), wherein an aspect ratio of the aluminum nitrides formed into the fibrous shape is 2 or more and 200 or less.
(7) A resin composition used for manufacturing a resin molded body made of a material containing a resin material, the resin composition comprising the heat dissipating filler described in any one of the above-mentioned items (1) to (6).
(8) The resin composition described in the above-mentioned item (7), wherein a content of the resin material in the resin composition is 5% by volume or more and 60% by volume or less.
(9) A resin molded body made of a material containing a resin material, the resin molded body comprising the heat dissipating filler described in any one of the above-mentioned items (1) to (6).
(10) The resin molded body described in the above-mentioned item (9), wherein a content of the resin material in the resin molded body is 5% by volume or more and 60% by volume or less.
(11) The resin molded body described in the above-mentioned item (9) or (10), wherein heat conductivity of the resin molded body in each of three mutually perpendicular axial directions is 0.5 W/m·K or more and 20 W/m·K or less.
(12) The resin molded body described in any one of the above-mentioned items (9) to (11), wherein the resin molded body has a withstand voltage of 1 kV/mm or more and 100 kV/mm or less.

### EFFECTS OF THE INVENTION

According to the present invention, it is possible to provide a heat dissipating filler that can reduce overall thermal resistance and is suitable for use in production of a resin molded body that has excellent heat conductivity not only in an in-plane direction but also in a thickness direction, a resin composition that can reduce the overall thermal resistance and is suitable for use in the production of the resin molded body that has the excellent heat conductivity not only in the in-plane direction but also in the thickness direction and the resin molded body that can reduce the overall thermal resistance and has the excellent heat conductivity not only in the in-plane direction but also in the thickness direction.

### BRIEF DESCRIPTION OF THE DRAWINGS

FIG. 1 is a schematic diagram showing an example of a configuration of a heat dissipating filler and a resin molded body.
FIG. 2 is a schematic diagram showing an example of a usage pattern of the resin molded body shown in FIG. 1 is used.

### MODE FOR CARRING OUT THE INVENTION

Hereinbelow, description will be made on preferred embodiments according to the present invention in detail.

### [1] Heat Dissipating Filler

First, a heat dissipating filler of the present invention will be described.

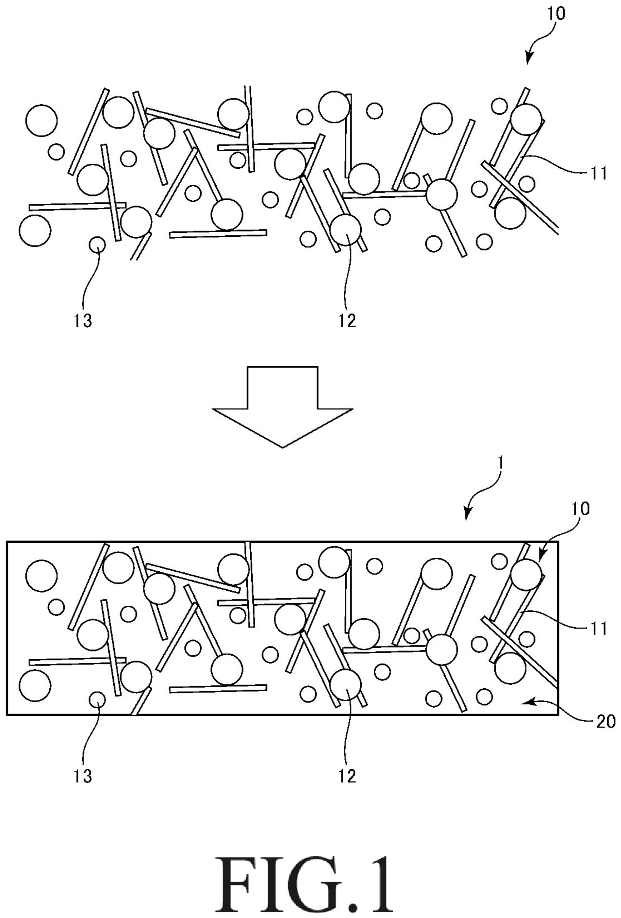

FIG. 1 is a schematic diagram showing an example of a configuration of a heat dissipating filler and a resin molded body.

The heat dissipating filler 10 of the present invention is a heat dissipating filler used for manufacturing a resin molded body 1 and contains first heat conductive particles 12 each having a particle size of 10 µm or more and 150 µm or less, second heat conductive particles 13 each having a particle size of 0.1 µm or more and less than 10 µm and aluminum nitrides 11 formed into a fibrous shape (acicular aluminum nitrides 11 shown in FIG. 1).

Further, the heat dissipating filler 10 of the present invention is characterized in that, when a total amount of the first heat conductive particles 12, the second heat conductive particles 13 and the aluminum nitrides 11 formed into the fibrous shape is 100 parts by volume, the heat dissipating filler contains the first heat conductive particles 12 in a ratio of 30 parts by volume or more and 80 parts by volume or less, the second heat conductive particles 13 in a ratio of 5 parts by volume or more and 50 parts by volume or less and the aluminum nitrides 11 formed into the fibrous shape in a ratio of 1 part by volume or more and 40 parts by volume or less.

Since the heat dissipating filler 10 of the present invention contains the aluminum nitrides 11 formed into the fibrous shape, a large number of heat transfer paths are suitably formed by the plurality of aluminum nitrides 11 formed into the fibrous shape.

Further, the heat dissipating filler 10 of the present invention contains the first heat conductive particles 12 with a relatively large particle size and the second heat conductive particles 13 with a relatively small particle size in a specified ratio, which allows the first heat conductive particles 12 to penetrate into gaps between the relatively large aluminum nitrides 11 formed into the fibrous shape and further allows the second heat conductive particles 13 to penetrate into the gaps between the aluminum nitrides 11 formed into the fibrous shape and the first heat conductive particles 12. As a result, the aluminum nitrides 11 formed into the fibrous shape and the first and second heat conductive particles 12 are densely packed, favorably forming a greater number of heat transfer paths and improving heat conductivity.

In particular, by including a predetermined ratio of the first heat conductive particles 12 and second thermally conductive particles 13 in addition to the aluminum nitrides 11 formed into the fibrous shape, overall thermal resistance can be reduced, and, for example, the heat transfer paths can be preferably formed not only in an in-plane direction of the resin molded body 1 but also in a thickness direction of the resin molded body.

In this specification, the particle size of the heat conductive particles (first heat conductive particles 12 and second heat conductive particles 13) can be determined by image analysis of enlarged images taken with a scanning electron microscope (SEM).

Further, in the present invention, the heat conductive particle refers to a particle made of a material having a heat conductivity of 1 W/(m·K) or more at 25°C. by itself.

Furthermore, by including the first heat conductive particles 12 and the second heat conductive particles 13 in the predetermined ratio, the aluminum nitrides 11 formed into the fibrous shape can exist in a state with minimal bending during a molding process of the resin molded body 1, making it easier to ensure the heat transfer paths.

In contrast, if the above conditions are not satisfied, satisfactory results will not be obtained.

For example, even if the heat dissipating filler 10 contains the first heat conductive particles 12 and the second heat conductive particles 13, if it does not contain the aluminum nitrides 11 formed into the fibrous shape, it will be impossible to properly form the heat transfer paths, particularly in the in-plane direction, in the resin molded body 1 manufactured using the heat dissipating filler 10, and the thermal resistance of the entire resin molded body 1 manufactured using the heat dissipating filler 10 will not be sufficiently reduced.

Further, even if the heat dissipating filler 10 contains the aluminum nitrides 11 formed into the fibrous shape, if it does not contain both the first heat conductive particles 12 and the second heat conductive particles 13, the above-described filling structure cannot be achieved, and the heat transfer paths, particularly the heat transfer paths in the thickness direction, of the resin molded body 1 manufactured using the heat dissipating filler 10 cannot be formed favorably. As a result, the thermal resistance of the entire resin molded body 1 manufactured using the heat dissipating filler 10 cannot be sufficiently reduced.

Further, even if the resin molded body 1 contains the aluminum nitrides 11 formed into the fibrous shape and the second heat conductive particles 13, if it does not contain the first heat conductive particles 12, or even if it contains the aluminum nitrides 11 formed into the fibrous shape and the first heat conductive particles 12, if it contains heat conductive particles with a smaller particle size instead of the second heat conductive particles 13, the heat transfer path of the resin molded body 1 manufactured using the heat dissipating filler 10 cannot be formed properly, and the overall thermal resistance becomes high.

Further, even if the resin molded body 1 contains the aluminum nitrides 11 formed into the fibrous shape and the first heat conductive particles 12, if it does not contain the second heat conductive particles 13, or if it contains the aluminum nitrides 11 formed into the fibrous shape and the second heat conductive particles 13 but contains heat conductive particles with a larger particle size instead of the first heat conductive particles 12, the filling structure described above cannot be obtained, and the heat transfer paths of the resin molded body 1 manufactured using the heat dissipating filler 10 cannot be suitably formed.

Further, if the content of the first heat conductive particles 12 is less than the above-mentioned lower limit value, the above-mentioned densely packed structure cannot be achieved, and the heat transfer paths of the resin molded body 1 manufactured using the heat dissipating filler 10 are not sufficiently formed. Furthermore, a hardness of the resin molded body 1 increases, resulting in an increase in the overall thermal resistance.

Further, if the content of the first heat conductive particles 12 exceeds the upper limit value, the overall thermal resistance of the resin molded body 1 manufactured using the heat dissipating filler 10 becomes high.

Further, if the content of the second heat conductive particles 13 is less than the above-mentioned lower limit value, the above-mentioned densely packed structure cannot be achieved, and the heat transfer paths of the resin molded body 1 manufactured using the heat dissipating filler 10 are not sufficiently formed. Furthermore, the hardness of the resin molded body 1 increases, resulting in the increase in the overall thermal resistance.

Further, if the content of the second heat conductive particles 13 exceeds the upper limit value, the overall thermal resistance of the resin molded body 1 manufactured using the heat dissipating filler 10 becomes high.

Further, if the content of the aluminum nitrides 11 formed into the fibrous shape is less than the above-mentioned lower limit value, the heat transfer paths of the resin molded body 1 manufactured using the heat dissipating filler 10, particularly the heat transfer paths in the in-plane direction, cannot be made sufficient.

Furthermore, if the content of the aluminum nitrides 11 formed into the fibrous shape exceeds the upper limit value, the resin molded body 1 manufactured using the heat dissipating filler 10 may have the high hardness and high thermal resistance, and a weight of the resin molded body 1 may increase and the moldability and processability of the resin molded body 1 may decrease.

### [1-1] First Heat Conductive Particles

The first heat conductive particles will be described below.

The first heat conductive particle 12 is made of a material having the heat conductivity and has the particle size of 10 µm or more and 150 µm or less.

Examples of materials constituting the first heat conductive particles 12 include metal oxides such as aluminum oxide (alumina), zinc oxide, magnesium oxide, titanium oxide, silicon oxide, silicon dioxide (silica) and beryllium oxide; metal hydroxides such as aluminum hydroxide and magnesium hydroxide; nitrides such as aluminum nitride, silicon nitride and boron nitride; carbides such as boron carbide, titanium carbide, and silicon carbide; carbon-based materials such as graphite and black lead; and metals such as aluminum, copper, nickel and silver. One or more selected from these may be used in combination.

If electrical insulation is required for the heat dissipating filler 10 or the resin molded body 1, it is preferable that the material constituting the first heat conductive particles 12 is at least one selected from the group consisting of the metal oxides, the metal hydroxides and the nitrides, and it may be an amphoteric hydroxide or amphoteric oxide, and specific examples include aluminum hydroxide, boron nitride, aluminum nitride, zinc oxide, aluminum oxide (alumina), silicon dioxide (silica), magnesium oxide, magnesium hydroxide and the like. One or more selected from these may be used in combination.

Among these, it is preferable that the material constituting the first heat conductive particles 12 contains at least one selected from the group consisting of aluminum nitride, boron nitride and alumina.

This allows the heat conductivity of the heat dissipating filler 10 and the resin molded body 1 manufactured using the heat dissipating filler 10 to be improved.

Further, since these materials have excellent heat conductivity and high electrical insulation, the resin molded body 1 manufactured can be suitably used, for example, as a heat dissipating member for electronic devices and the like that require higher insulation properties.

In particular, alumina is chemically stable, readily available, and relatively inexpensive, allowing for a stable supply and contributing to reduced manufacturing costs. In addition, the strength of the resin molded body 1 can be increased.

Further, by using aluminum nitride, the heat conductivity of the aluminum nitride itself is high, and the thermal resistance between the first heat conductive particles 12 and the aluminum nitrides formed into the fibrous shape 11 can be more effectively reduced. Therefore, the heat conductivity of the heat dissipating filler 10 and the resin molded body 1 manufactured using the heat dissipating filler 10 can be made particularly high.

Further, the use of boron nitride can improve heat dissipation, and the boron nitride has high chemical stability and excellent environmental resistance.

The particle size of the first heat conductive particle 12 may be 10 µm or more and 150 µm or less, but an average particle size of the first heat conductive particles 12 is preferably 15 µm or more and 140 µm or less, more preferably 20 µm or more and 130 µm or less and even more preferably 25 µm or more and 120 µm or less.

This makes it possible to make the above-mentioned effects of the present invention more pronounced.

In this specification, unless otherwise specified, the average particle size means the particle size at which the frequency of particles reaches 50% when the particle amount is cumulatively calculated from the small particle size side in the particle distribution measured by image analysis and can be determined, for example, by measurement using a particle shape image analyzer "PITA-04" (manufactured by Seishin Enterprise Co., Ltd.).

In the heat dissipating filler 10, when the total amount of the first heat conductive particles 12, the second heat conductive particles 13 and the aluminum nitrides 11 formed into the fibrous shape is 100 parts by volume, it is preferable that the first heat conductive particles 12 are contained in a ratio of 35 parts by volume or more and 75 parts by volume or less, and it is more preferable that the first heat conductive particles 12 are contained in a ratio of 40 parts by volume or more and 70 parts by volume or less.

This makes it possible to make the above-mentioned effects of the present invention more pronounced.

### [1-2] Second Heat Conductive Particles

The second heat conductive particles will be described below.

The second heat conductive particle 13 is made of a material having the heat conductivity and has the particle size of 0.1 µm or more and 10 µm or less.

Materials constituting the second heat conductive particles 13 may be the same as those constituting the first heat conductive particles 12 described above, but it is preferable that the second heat conductive particles 13 contain at least one selected from the group consisting of aluminum nitride, alumina and silica.

This allows the heat conductivity of the heat dissipating filler 10 and the resin molded body 1 manufactured using the heat dissipating filler 10 to be improved.

These materials have excellent heat conductivity and high electrical insulation, and therefore the resin molded body 1 produced can be used as a heat dissipating member for electronic devices and the like that require high insulation.

In particular, silica has thermal expansion properties similar to those of a silicon-based semiconductor substrate, and therefore the resin molded body 1 can be more suitably used as a heat dissipating member for, for example, an electronic device.

The particle size of the second heat conductive particle 13 may be 0.1 µm or more and less than 10 µm, but an average particle size of the second heat conductive particles 13 is preferably 0.2 µm or more and 9.5 µm or less, more preferably 0.3 µm or more and 9.0 µm or less and even more preferably 0.4 µm or more and 8.0 µm or less.

This makes it possible to make the above-mentioned effects of the present invention more pronounced.

In the heat dissipating filler 10, when the total amount of the first heat conductive particles 12, the second heat conductive particles 13 and the aluminum nitrides 11 formed into the fibrous shape is 100 parts by volume, it is preferable that the second heat conductive particles 13 are contained in a ratio of 10 parts by volume or more and 45 parts by volume or less, and it is more preferable that the second heat conductive particles 13 are contained in a ratio of 15 parts by volume or more and 40 parts by volume or less.

This makes it possible to make the above-mentioned effects of the present invention more pronounced.

### [1-3] Aluminum Nitrides formed into a fibrous shape

The aluminum nitrides formed into the fibrous shape will be described below.

Aluminum nitride is a material that has high thermal conductivity and high insulating properties. The aluminum nitride 11 formed into a fibrous shape is a component that plays an important role in improving the heat conductivity of the resin molded body 1 by forming a heat dissipating path that increases contact efficiency between fillers. It is also an important component in improving the flexibility, transparency, moldability and processability and the like of the resin molded body 1.

The aluminum nitrides 11 formed into the fibrous shape may be polycrystals but are preferably made of single crystal whiskers.

Since the single crystal whiskers have a higher heat conductivity than polycrystals, the heat conductivity of the heat dissipating filler 10 and the resin molded body 1 manufactured using the heat dissipating filler 10 can be made higher.

Further, by using high-purity single crystal whiskers as the aluminum nitrides 11 formed into the fibrous shape, the heat conductivity can be increased compared to polycrystals containing a large amount of impurities and a volume fraction of the aluminum nitrides 11 formed into the fibrous shape can be reduced.

This makes it possible to maintain mechanical properties of the resin molded body 1, such as flexibility, particularly when the resin molded body 1 is in a sheet form.

Further, the single crystal whiskers used as the aluminum nitrides 11 formed into the fibrous shape preferably have a hexagonal wurtzite crystal structure with the (0002) plane positioned perpendicular to the c-axis direction. Such single crystal whiskers can achieve a heat conductivity of 120 W/m K or more and 320 W/m K or less.

Further, in this embodiment, the single crystal whisker (AIN whiskers) as the aluminum nitride 11 formed into the fibrous shape may include a fibrous aluminum nitride 11 single crystal and an oxygen-containing layers that cylindrically coat a surface of the aluminum nitride single crystal. Furthermore, each of the aluminum nitrides 11 formed into the fibrous shape may include a hydrophobic layer further outside the oxygen-containing layer that cylindrically coats the oxygen-containing layer.

Details of the structure and manufacturing method of such aluminum nitrides 11 formed into the fibrous shape are publicly known, for example, from JP-A-2014-73951 and JP-A-2018-154534, and therefore detailed description thereof will be omitted.

A length in a long axis direction of the aluminum nitride 11 formed into the fibrous shape is preferably 1.0 µm or more and 5.0 cm or less, more preferably 5.0 µm or more and 4.0 cm or less and even more preferably 10.0 µm or more and 3.0 cm or less.

This increases the number of contact points between the aluminum nitrides 11 formed into the fibrous shape. Therefore, many heat transfer paths can be secured by contact between the aluminum nitrides 11 formed into the fibrous shape, and the heat conductivity of the resin molded body 1 manufactured using the heat dissipating filler 10 can be increased.

A length in a short axis direction of the aluminum nitride 11 formed into the fibrous shape is preferably 0.5 µm or more and 50.0 µm or less, more preferably 1.0 µm or more and 40.0 µm or less and even more preferably 5.0 µm or more and 30.0 µm or less (In this regard, the long axis direction of the aluminum nitride 11 formed into the fibrous shape means a longitudinal direction of the aluminum nitride 11 formed into the fibrous shape, and the short axis direction of the aluminum nitride 11 formed into the fibrous shape means a direction perpendicular to the long axis direction).

This allows a large number of heat transfer paths to be preferably formed by the multiple aluminum nitrides 11 formed into the fibrous shape, thereby improving the heat conductivity of the heat dissipating filler 10 and the resin molded body 1 manufactured using the heat dissipating filler 10.

The lengths in the long axis direction and the short axis direction of the aluminum nitrides 11 formed into the fibrous shape can be measured by image analysis of an enlarged image taken with a scanning electron microscope (SEM).

An aspect ratio of the aluminum nitrides 11 formed into the fibrous shape (the value obtained by dividing the length in the long axis direction by the length in the short axis direction) is preferably 2 or more and 200 or less, more preferably 3 or more and 180 or less and even more preferably 5 or more and 150 or less.

This makes it possible to more efficiently increase a contact density per unit volume between the aluminum nitrides 11 formed into the fibrous shape, and even if the content of the aluminum nitrides 11 formed into the fibrous shape is relatively small, it is possible to impart high heat conductivity to the resin molded body 1. Further, for example, when the resin molded body 1 is in a sheet shape, it is possible to make the mechanical properties of the resin molded body 1, such as flexibility, more suitable.

If the aspect ratio exceeds the upper limit value, the aluminum nitrides 11 formed into the fibrous shape is more likely to be broken or otherwise damaged during manufacturing the resin molded body 1, which may result in an increase in fine powder.

In the heat dissipating filler 10, when the total amount of the first heat conductive particles 12, second heat conductive particles 13 and aluminum nitrides 11 formed into the fibrous shape is 100 parts by volume, it is preferable that the aluminum nitrides 11 formed into the fibrous shape are contained in a ratio of 5 parts by volume or more and 35 parts by volume or less, and it is more preferable that the aluminum nitrides 11 formed into the fibrous shape are contained in a ratio of 10 parts by volume or more and 30 parts by volume or less.

This makes it possible to make the above-mentioned effects of the present invention more pronounced.

### [1-4] Other Components

In addition to the aforementioned aluminum nitrides 11 formed into the fibrous shape, first heat conductive particles 12 and second heat conductive particles 13, the heat dissipating filler 10 may contain other components. Hereinafter, in this section, such components will be referred to as "other components".

Examples of the other components include heat conductive particles with a particle size of less than 0.1 µm, heat conductive particles with a particle size of more than 10 µm and heat conductive fibers made of materials other than aluminum nitride.

However, a content of other components in the heat dissipating filler 10 is preferably 5% by volume or less, more preferably 3% by volume or less and even more preferably 1% by volume or less.

### [2] Resin Composition

Next, the resin composition of the present invention will be described.

The resin composition of the present invention is a resin composition used to manufacture the resin molded body 1 made of a material containing a resin material 20 and is characterized by including the heat dissipating filler 10 described above.

As a result, the resin molded body 1 manufactured using the resin composition has a large number of heat transfer paths preferably formed by the heat dissipating filler 10, reducing the overall thermal resistance and providing excellent heat conductivity not only in the in-plane direction but also in the thickness direction.

### [2-1] Heat Dissipating Filler

The resin composition of the present invention contains the heat dissipating filler 10 described above.

A content of the heat dissipating filler 10 in the resin composition is preferably 5% by volume or more and 60% by volume or less, more preferably 10% by volume or more and 55% by volume or less and even more preferably 15% by volume or more and 50% by volume or less.

This makes it possible to more effectively achieve both the effect of improving the heat conductivity of the resin molded body 1 manufactured using the resin composition, thereby reducing the overall thermal resistance and the effect of improving the moldability and processability of the resin molded body 1.

### [2-2] Resin Material

The resin composition of the present invention contains the resin material 20.

Examples of the resin material 20 that can be used include a thermosetting resin such as silicone resin, epoxy resin, phenol resin, melamine resin, urea resin, thermosetting polyimide, unsaturated polyester resin or polyurethane.

Further, examples of the resin material 20 that can be used include a thermoplastic resin such as polyethylene, polypropylene, polystyrene, polyvinyl chloride, polyvinylidene chloride, polyvinyl acetate, acrylonitrile styrene copolymer, acrylonitrile butadiene styrene copolymer, acrylonitrile ethylene propylene diene styrene copolymer, methacrylic resin and the like can be used.

Further, examples of the resin material 20 that can be used include a fluororesin such as polytetrafluoroethylene, polychlorotrifluoroethylene, polyvinylidene fluoride or polyvinyl fluoride.

Further, examples of the resin material 20 that can be used include polycarbonate, polyamide resin, polyacetal, polyethylene terephthalate, polybutylene terephthalate, polyether ether ketone, polyphenyl sulfide, polysulfone, polyetherimide, polyamideimide, thermoplastic polyimide and liquid crystal polymer.

Further, examples of the resin material 20 that can be used include acrylonitrile styrene acrylate, atactic polypropylene, cellulose acetate, cellulose acetate butyrate, chlorinated vinyl chloride, chloroprene rubber, diallyl phthalate, ethylene ethyl acrylate, ethylene propylene diene terpolymer, ethylene tetrafluoroethylene copolymer, ethylene vinyl acetate copolymer, ethyl vinyl ether, ethylene vinyl alcohol copolymer, perfluoro rubber, tetrafluoroethylene-hexafluoropropylene copolymer and soft urethane foam.

Further, examples of the resin material 20 that can be used include glass fiber reinforced plastic, glass fiber reinforced thermoplastic plastic, butyl rubber, ionomer, isoprene rubber, melamine formaldehyde, methyl methacrylate, nitrile rubber, natural rubber, polyacrylic acid, polyaryl ether ketone, polyester alkyd resin, polyacrylonitrile and polyarylate.

Further, examples of the resin material 20 that can be used include polyparaphenylene benzobisoxazole, polybutadiene styrene, diallyl terephthalate, polydicyclopentadiene, polyethylene naphthalate, polyethylene oxide, polyethersulfone, phenol formaldehyde, tetrafluoroethylene perfluoroalkyl vinyl ether copolymer, polyisobutylene and polymethylpentene.

Further, examples of the resin material 20 that can be used include polyphthalamide, polyphenylene ether, polyphenylene oxide, polytrimethylene terephthalate, reactive polyurethane, polyvinyl alcohol, polyvinyl butyral, acrylic-modified polyvinyl chloride, polyvinyl dichloride and vinyl chloride-vinyl acetate copolymer.

Furthermore, examples of the resin material 20 that can be used include polyvinyl formal, polyvinylpyrrolidone, styrene butadiene, styrene butadiene rubber styrene block copolymer, styrene butadiene styrene block copolymer, styrene ethylene butylene styrene block copolymer, styrene ethylene propylene styrene block copolymer, styrene isoprene styrene block copolymer, sheet molding compound, syndiotactic polystyrene, thermoplastic elastomer, thermoplastic polyurethane, urea formaldehyde resin, ultra-high molecular weight polyethylene, vinyl chloride ethylene, vinyl chloride octyl acrylate, crosslinked polyethylene and the like.

As the resin material 20, for example, one or a combination of two or more of the above-exemplified materials can be used.

A content of the resin material 20 in the resin composition is preferably 5% by volume or more and 60% by volume or less, more preferably 10% by volume or more and 55% by volume or less, and even more preferably 15% by volume or more and 50% by volume or less.

This makes it possible to more suitably achieve both the effect of improving the heat conductivity of the resin molded body 1 and reducing the overall thermal resistance and the effect of making the moldability and processability of the resin molded body 1 favorable.

### [2-3] Other Components

In addition to the heat dissipating filler 10 and resin material 20 described above, the resin composition of the present invention may contain other components. Hereinafter, in this section, such components will be referred to as "other components".

Examples of other components include plasticizers, colorants, antioxidants, ultraviolet absorbers, light stabilizers, softeners, modifiers, rust inhibitors, fillers other than the heat dissipating filler of the present invention described above, bulking agents, electromagnetic wave absorbing materials, surface lubricants, corrosion inhibitors, heat stabilizers, lubricants, primers, antistatic agents, polymerization inhibitors, crosslinking agents, catalysts, leveling agents, thickeners, dispersants, antioxidants, flame retardants, hydrolysis inhibitors and corrosion inhibitors.

However, a content of the other components in the resin composition of the present invention is preferably 10% by volume or less, more preferably 7% by volume or less and even more preferably 5% by volume or less.

### [3] Resin Molded body

Next, the resin molded body of the present invention will be described.

The resin molded body 1 of the present invention is a resin molded body 1 made of a material containing the resin material 20 and is characterized by including the heat dissipating filler 10 described above.

As a result, the resin molded body 1 has a large number of heat transfer paths preferably formed by the above-mentioned heat dissipating filler 10, which reduces the overall thermal resistance and provides excellent heat conductivity not only in the in-plane direction but also in the thickness direction.

The resin molded body 1 can be suitably manufactured, for example, using the resin composition of the present invention described above. Furthermore, in manufacturing the resin molded body 1, a combination of multiple resin compositions of the present invention may be used. Furthermore, the resin molded body 1 may be manufactured using other components or other compositions in addition to the resin composition of the present invention described above. Examples of such other components or other compositions include a resin material for dilution.

### [3-1] Heat Dissipating Filler

The resin molded body of the present invention contains the heat dissipating filler 10 described above.

A content of the heat dissipating filler 10 in the resin molded body 1 is preferably 5% by volume or more and 60% by volume or less, more preferably 10% by volume or more and 55% by volume or less and even more preferably 15% by volume or more and 50% by volume or less.

This makes it possible to more suitably achieve both the effect of improving the heat conductivity of the resin molded body 1 and reducing the overall thermal resistance and the effect of making the moldability and processability of the resin molded body 1 favorable.

### [3-2] Resin Material

The resin molded body of the present invention contains the resin material 20 described above.

Further, a content of the resin material 20 in the resin molded body 1 is preferably 5% by volume or more and 60% by volume or less, more preferably 10% by volume or more and 55% by volume or less, and even more preferably 15% by volume or more and 50% by volume or less.

This makes it possible to more suitably achieve both the effect of improving the heat conductivity of the resin molded body 1 and reducing the overall thermal resistance and the effect of making the moldability of the resin molded body 1 favorable.

### [3-3] Other Components

In addition to the heat dissipating filler 10 and resin material 20 described above, the resin molded body 1 may contain other components. Hereinafter, in this section, such components will be referred to as "other components".

Examples of other components include plasticizers, colorants, antioxidants, ultraviolet absorbers, light stabilizers, softeners, modifiers, rust inhibitors, fillers other than the heat-dissipating filler of the present invention described above, bulking agents, electromagnetic wave absorbing materials, surface lubricants, corrosion inhibitors, heat stabilizers, lubricants, primers, antistatic agents, polymerization inhibitors, crosslinking agents, catalysts, leveling agents, thickeners, dispersants, antioxidants, flame retardants, hydrolysis inhibitors and corrosion inhibitors.

However, a content of the other components in the resin molded body of the present invention is preferably 10% by volume or less, more preferably 7% by volume or less and even more preferably 5% by volume or less.

### [3-4] Other Conditions

A shape of the resin molded body 1 is not particularly limited and can be, for example, sheet-like, block-like or the like, depending on the intended use of the resin molded body 1.

For example, when the resin molded body 1 is in a form of a sheet, a thickness of the resin molded body 1 is preferably 0.15 mm or more and 20 mm or less, more preferably 0.20 mm or more and 10 mm or less and even more preferably 0.25 mm or more and 5 mm or less.

This allows the sheet-shaped resin molded body 1 to suitably conform to a surface shape of a member to which the resin molded body 1 is applied, and the resin molding 1 can have excellent substantial heat conductivity.

Further, if the resin molded body 1 is block-shaped, even if the member to which the resin molded body 1 is applied has a complex surface shape, the resin molded body 1 and the member can be suitably adhered to each other, and the substantial heat conductivity can be excellent.

It is preferable that the resin molded body 1 satisfy the following conditions.

For example, the heat conductivity of the resin molded body 1 in each of three mutually perpendicular axial directions is preferably 0.5 W/m·K or more and 20 W/m·K or less, more preferably 1.0 W/m·K or more and 19 W/m·K or less and even more preferably 2.0 W/m·K or more and 18 W/m·K or less.

This allows the resin molded body 1 to have excellent heat conductivity in three axial directions that are perpendicular to one another.

For example, when the three mutually perpendicular axes are the x-axis, y-axis and z-axis, the x-axis and y-axis are within a plane of the resin molded body 1 and the z-axis is the thickness direction of the resin molded body 1, the resin molded body 1 will have excellent heat conductivity not only in the in-plane direction but also in the thickness direction.

In this regard, the heat conductivity value can be measured using a hot disk method (conforming to ISO 22007-2) using a TPS-2500S manufactured by Kyoto Electronics Manufacturing Co., Ltd.

Further, a withstand voltage of the resin molded body 1 is preferably 1 kV/mm or more and 100 kV/mm or less.

As a result, for example, when the resin molded product 1 is mounted on an electronic component as a sheet-like heat dissipating member, insulation breakdown is more effectively suppressed even under high voltage. Therefore, not only is heat from high-heat components efficiently conducted, but insulation is also ensured, making resin molded body 1 more suitable for use as the heat dissipating member in a variety of electronic devices.

The withstand voltage may be a value measured using a method conforming to JIS C2110-1:2016.

### [4] Method for Manufacturing Resin Molded Body

Next, an example of a method for manufacturing a resin molded body will be described.

First, a plurality (a large number) of aluminum nitrides 11 formed into the fibrous shape manufactured by a known method, a plurality of first heat conductive particles 12 manufactured by a known method and a plurality of second heat conductive particles 13 manufactured by a known method are prepared in advance and then mixed in the above-mentioned ratio to obtain the heat dissipating filler 10.

Next, the obtained heat dissipating filler 10 and the resin material 20 are mixed and kneaded to obtain the resin composition in which the heat dissipating filler 10 is uniformly dispersed.

The resin composition thus obtained is molded into a predetermined shape, and the resin material 20 is solidified (cured), thereby producing the resin molded body 1 .

### [5] Usage Pattern of Resin Molded body

Next, a usage pattern of the resin molded body will be described.

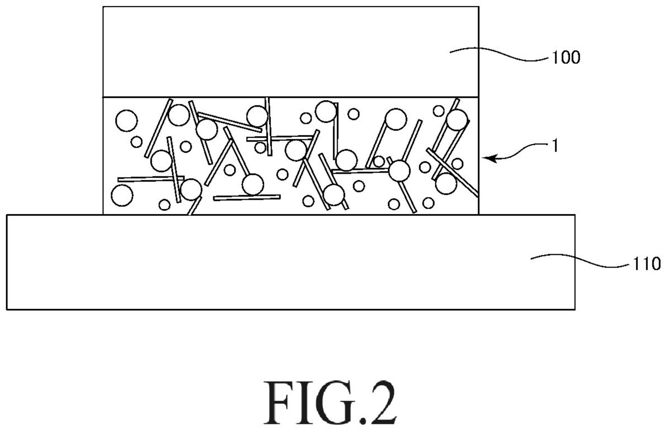

FIG. 2 is a schematic diagram showing an example of usage pattern of the resin molded body shown in FIG. 1 is used.

As described above, the resin molded body 1 has the low overall thermal resistance and the excellent heat conductivity not only in the in-plane direction but also in the thickness direction. As a heat conductive body, the resin molded body 1 can be used, for example, as various heat dissipating members, a heat transfer member that comes into contact with a high-temperature member and a heat dissipating member to transfer heat from the high-temperature member to the heat dissipation member for efficient heat dissipation from the heat dissipating member, or a heat transfer member that comes into contact with a heating object to be heated and a high-temperature member that is hotter than the heating object to transfer heat energy from the high-temperature member to the heating object for efficient heating of the heating object.

In the following description, the resin molded body will be mainly described as being used as a heat conductive body, but the usage pattern of the resin molded body of the present invention is not limited to this example.

As described above, the shape of the resin molded body 1 is not particularly limited, and can be, for example, sheet-like, block-like or the like, depending on the intended use of the resin molded body 1.

The following description will be focused on a case where the resin molded body 1 is used in contact with at least a part of a surface of a high-temperature member that is a heat generating body.

The high-temperature members are not particularly limited as long as they reach a temperature higher than the surrounding atmosphere, and examples thereof include various electronic and electrical components. More specifically, examples of these components include computer central processing units (CPUs), image processing units (GPUs), power devices, FPGAs, ASICs, smartphone SoCs, DSPs and microcontrollers for embedded devices, semiconductor elements such as transistors, light-emitting elements such as laser diodes, light-emitting diodes (LEDs), electroluminescent devices and liquid crystal displays, imaging elements such as CCDs and image sensors (e.g., 8K), switching regulators, motor coils and printer heads. The high-temperature members may also be relays, batteries, transformers, power supply units, bearings, electron guns, vacuum tubes and high-frequency oscillators. The high-temperature members may also be, for example, tubes or containers containing high-temperature fluids.

A maximum surface temperature of the high-temperature member is preferably 30°C or higher and 180°C or lower, more preferably 40°C or higher and 140°C or lower and even more preferably 50°C or higher and 100°C or lower.

As described above, the resin molded body 1 reduces the overall thermal resistance and has the excellent heat conductivity not only in the in-plane direction but also in the thickness direction, so that the substantial heat conductivity from the high-temperature member to the heat dissipating member can be excellent, thereby enabling the high-temperature member to be cooled efficiently.

In the example shown in FIG. 2, a sheet-shaped resin molded body 1 is disposed between a high-temperature member 100, which is a heat generating body, and a heat dissipation member 110 and is thermally coupled thereto.

The resin molded body 1 may be in contact with the heat dissipation member. In other words, the resin molded body 1 may be used not as the heat dissipating member, but as a heat transfer member that comes into contact with the high-temperature member and the heat dissipation member, transfers heat from the high-temperature member to the heat dissipation member and efficiently dissipates heat from the heat dissipating member.

This makes it possible to improve the efficiency of heat dissipation from the high-temperature member.

The resin molded body of the present invention can be applied to electronic devices. Such electronic devices have, for example, electronic components and the resin molded body of the present invention as the heat dissipating member or the heat transfer member described above.

Examples of the electronic devices to which the resin molded body of the present invention can be applied include small electronic devices.

Examples of the small electronic devices include notebook computers, tablet devices, portable communication terminal devices, mobile phones, smartphones, portable music players, portable radios, portable televisions, digital cameras, video cameras, portable game devices, e-book readers and portable medical devices.

The preferred embodiments of the present invention have been described. However, the present invention is not limited thereto.

For example, in the above description, an example was given in which the resin molded body is rectangular in plan view, but the shape of the resin molded body can be appropriately set depending on the shape of the component that comes into contact with the resin molded body and the like.

Further, for example, in the above-described embodiments, the resin molded body was typically described as being in the form of a sheet or block with a relatively flat surface. However, the resin molded body may also be in the form of a sheet with a stepped surface. Such resin molded bodies can be suitably used, for example, as TIM sheets used to cool components with complex surface shapes, such as CCDs, LEDs, and small sensor modules.

Furthermore, the resin molded body of the present invention is not limited to those produced by the methods described above. More specifically, for example, the resin molded body of the present invention is not limited to those manufactured using the heat dissipating filler of the present invention or the resin composition of the present invention. It may also be produced using, for example, a first resin composition containing the first heat conductive particles and the resin material but not containing the second heat conductive particles and the aluminum nitrides formed into the fibrous shape, a second resin composition containing the second heat conductive particles and the resin material but not containing the first heat conductive particles and the aluminum nitrides formed into the fibrous shape and a third resin composition containing the aluminum nitrides formed into the fibrous shape and the resin material but not containing the first heat conductive particles and second heat conductive particles.

### EXAMPLES

Hereinafter, the present invention will be described in more detail with reference to specific examples, but the present invention is not limited to these examples. In the following description, treatments for which no temperature conditions are specified were performed at room temperature, specifically 25°C. Furthermore, various measurement conditions for which no temperature conditions are specified are values at room temperature, specifically 25°C.

### [6] Manufacture of heat dissipating filler

### (Example 1)

A powder (manufactured by Toyo Aluminum Co., Ltd.) was prepared as an aggregate of particles made of aluminum nitride. This powder was classified to obtain a powder (first powder) as an aggregate of particles made of first heat conductive particles having a particle size of 10 µm to 150 µm. The first heat conductive particles had an average particle size of 20 µm.

Further, a powder (manufactured by Tokuyama Corporation) was prepared as an aggregate of particles made of aluminum nitride. This powder was classified to obtain a powder (second powder) as an aggregate of particles made of second heat conductive particles with a particle size of 0.1 µm or more and less than 10 µm. The average particle size of the second heat conductive particles was 1 µm.

Further, thermalnite manufactured by U-MAP was prepared as aluminum nitrides formed into the fibrous shape (acicular aluminum nitrides). The aluminum nitrides formed into the fibrous shape had a length in the long axis direction of 1.0 µm or more and 5.0 cm or less, a length in the short axis direction of 0.5 µm or more and 50.0 µm or less and an aspect ratio of 2 or more and 200 or less. The aluminum nitrides formed into the fibrous shape had an average length in the long axis direction of 20 µm, an average length in the short axis direction of 2 µm and an average aspect ratio of 10.

Then, the first powder, the second powder and the aluminum nitrides formed into the fibrous shape were mixed in a volume ratio of 65:30:5 to obtain a heat dissipating filler.

The particle size was measured using a particle shape image analyzer "PITA-04" (manufactured by Seishin Enterprise Co., Ltd.).

### (Examples 2-7)

Heat dissipating fillers were manufactured in the same manner as in Example 1, except that the mixing ratio of the first powder, the second powder and the aluminum nitrides formed into the fibrous shape was changed so that the volume ratio of the first heat conductive particles, the second heat conductive particles and the aluminum nitrides formed into the fibrous shape was as shown in Table 1.

### (Comparative Examples 1-6)

Heat dissipating fillers were manufactured in the same manner as in Example 1, except that the mixing ratio of the first powder, the second powder and the aluminum nitrides formed into the fibrous shape was changed so that the volume ratio of the first heat conductive particles, the second heat conductive particles and the aluminum nitrides formed into the fibrous shape was as shown in Table 1.

### (Comparative Example 7)

A heat dissipating filler was manufactured in the same manner as in Example 1, except that the first powder and the second powder were mixed in a volume ratio of 68.4:31.6 without using the aluminum nitrides formed into the fibrous shape. In other words, the heat dissipating filler of this comparative example does not contain the aluminum nitrides formed into the fibrous shape.

The compositions of the heat dissipating fillers in the examples and comparative examples are summarized in Table 1.

**[Table 1]**

| | Content ratio [volume%] | | |
|---|---|---|---|
| | First heat conductive particles | Second heat conductive particles | Aluminum nitride fibers |
| Example 1 | 65 | 30 | 5 |
| Example 2 | 31 | 43 | 26 |
| Example 3 | 79 | 12 | 9 |
| Example 4 | 56 | 6 | 38 |
| Example 5 | 40 | 49 | 11 |
| Example 6 | 49 | 49 | 2 |
| Example 7 | 37 | 24 | 39 |
| Comparative Example 1 | 29 | 34 | 37 |
| Comparative Example 2 | 81 | 9 | 10 |
| Comparative Example 3 | 70 | 4 | 26 |
| Comparative Example 4 | 33 | 54 | 13 |
| Comparative Example 5 | 74.5 | 25 | 0.5 |
| Comparative Example 6 | 38 | 21 | 41 |
| Comparative Example 7 | 68.4 | 31.6 | 0 |

### [7] Evaluation

The following evaluations were performed using the heat dissipating fillers of the above examples and comparative examples.

### [7-1] Evaluation of Heat Conductivity

The heat dissipating fillers of the examples and comparative examples were dispersed in silicone resin to produce resin compositions. A content of the heat dissipating filler in each resin composition was 50% by volume, and a content of the resin in each resin composition was 50% by volume. The heat conductivity of the silicone resin at 25°C was 0.2 W/(m·K).

Each of the resin compositions obtained was poured into a disk-shaped silicone mold having a diameter of 45 mm and a thickness of 5 mm, molded and treated at 100°C for 60 minutes to obtain a resin molded body as a sample for measuring heat conductivity.

Each of the heat conductivity measurement samples obtained was measured using the hot disk method (conforming to ISO 22007-2) using a TPS-2500S manufactured by Kyoto Electronics Manufacturing Co., Ltd., and the heat conductivity in the in-plane direction and thickness direction was measured and evaluated according to the following criteria.
A: The heat conductivity is 5 W/(m·K) or more and 20 W/(m·K) or less.
B: The heat conductivity is 4 W/(m·K) or more and less than 5 W/(m·K).
C: The heat conductivity is 3.5 W/(m·K) or more and less than 4 W/(m· K).
D: The heat conductivity is 2.5 W/(m·K) or more and less than 3.5 W/(m ·K).
E: The heat conductivity is less than 2.5 W/(m·K).

### [7-2] Evaluation of Thermal Resistance

Each of the resulting resin compositions was cast into the disk-shaped silicone mold with a diameter of 45 mm and a thickness of 0.2 mm.

Each of the heat conductivity measurement samples obtained was measured in accordance with ASTM D5470 using DynTIM S from Mentor Graphics Corp., and the thermal resistance in the thickness direction was measured and evaluated according to the following criteria.
A: Thermal resistance is less than 1.5 (cm²·K)/W.
B: Thermal resistance is 1.5 (cm²·K)/W or more and less than 1.7 (cm²·K)/W.
C: Thermal resistance is 1.7 (cm²·K)/W or more and less than 2.0 (cm²·K)/W.
D: Thermal resistance is 2.0 (cm²·K)/W or more and less than 2.5 (cm²·K)/W.
E: Thermal resistance is 2.5 (cm²·K)/W or more.

These results are summarized in Table 2.

**[Table 2]**

| | Heat conductivity | | Thermal resistance |
|---|---|---|---|
| | In-plane direction | Thickness direction | |
| Example 1 | A | A | A |
| Example 2 | B | B | C |
| Example 3 | C | B | C |
| Example 4 | B | C | C |
| Example 5 | C | C | C |
| Example 6 | C | C | C |
| Example 7 | C | C | C |
| Comparative Example 1 | B | C | E |
| Comparative Example 2 | E | C | E |
| Comparative Example 3 | D | D | E |
| Comparative Example 4 | D | D | E |
| Comparative Example 5 | D | D | E |
| Comparative Example 6 | C | C | E |
| Comparative Example 7 | C | C | D |

As is clear from Table 2, excellent effects were obtained in the present invention, whereas satisfactory results were not obtained in the comparative examples.

Further, heat dissipating fillers were manufactured in the same manner as in each of the above examples, except that particles made of alumina and particles made of boron nitride were used instead of particles made of aluminum nitride as the first heat conductive particles, and when evaluated in the same manner as above, good results were obtained as above.

Further, heat dissipating fillers were manufactured in the same manner as in each of the above examples, except that particles made of alumina and particles made of silica were used instead of particles made of aluminum nitride as the second heat conductive particles, and when evaluated in the same manner as above, good results were obtained as above.

Further, in preparing the resin composition, resin compositions and resin molded bodies were produced in the same manner as described above, except that the content of the resin material was variously changed within the range of 5% by volume or more and 60% by volume or less, and evaluated in the same manner as above, and similarly good results were obtained.

Further, in the resin molded bodies according to the above-mentioned Examples, the heat conductivity in each of the three mutually perpendicular axial directions was in the range of 0.5 W/m·K or more and 20 W/m·K or less.

Furthermore, the withstand voltage values of the resin molded bodies according to the above examples, measured using a method conforming to JIS C2110-1:2016, were all within the range of 1 kV/mm or more and 100 kV/mm or less.

### INDUSTRIAL APPLICABILITY

The heat dissipating filler of the present invention is a heat dissipating filler used for manufacturing a resin molded body, the heat dissipating filler comprising: first heat conductive particles having a particle size of 10 µm or more and 150 µm or less; second heat conductive particles having a particle size of 0.1 µm or more and less than 10 µm; and aluminum nitrides formed into the fibrous shape, wherein, when a total amount of the first heat conductive particles, the second heat conductive particles and the aluminum nitrides formed into the fibrous shape is 100 parts by volume, the heat dissipating filler contains the first heat conductive particles in a ratio of 30 parts by volume or more and 80 parts by volume or less, the second heat conductive particles in a ratio of 5 parts by volume or more and 50 parts by volume or less and the aluminum nitrides formed into the fibrous shape in a ratio of 1 part by volume or more and 40 parts by volume or less.

Such a heat dissipating filler can reduce overall thermal resistance and can be suitably used for producing a resin molded body that has excellent heat conductivity not only in the in-plane direction but also in the thickness direction. Therefore, the heat dissipating filler of the present invention has industrial applicability.

The resin composition of the present invention is a resin composition used for manufacturing a resin molded body made of a material containing a resin material, the resin composition comprising the heat dissipating filler of the present invention.

Such a resin composition can reduce overall thermal resistance and can be suitably used to manufacture a resin molded body that has excellent heat conductivity not only in the in-plane direction but also in the thickness direction. Therefore, the resin composition of the present invention has industrial applicability.

The resin molded body of the present invention is a resin molded body made of a material containing a resin material, the resin molded body comprising the heat dissipating filler of the present invention.

Such a resin molded body can reduce overall thermal resistance and has excellent heat conductivity not only in the in-plane direction but also in the thickness direction. Therefore, the resin molded body of the present invention has industrial applicability.

### REFERENCE SIGNS LIST

- 1.: Resin molded body
- 10.: Heat dissipating filler
- 11.: Aluminum nitrides formed into a fibrous shape
- 12.: First heat conductive particles
- 13.: Second heat conductive particles
- 20.: Resin material
- 100.: High-temperature member
- 110.: Heat dissipating member

## Claims

1. A heat dissipating filler used for manufacturing a resin molded body, the heat dissipating filler comprising:
first heat conductive particles each having a particle size of 10 µm or more and 150 µm or less;
second heat conductive particles each having a particle size of 0.1 µm or more and less than 10 µm; and
aluminum nitrides formed into a fibrous shape,
wherein, when a total amount of the first heat conductive particles, the second heat conductive particles and the aluminum nitrides formed into the fibrous shape is 100 parts by volume, the heat dissipating filler contains the first heat conductive particles in a ratio of 30 parts by volume or more and 80 parts by volume or less, the second heat conductive particles in a ratio of 5 parts by volume or more and 50 parts by volume or less and the aluminum nitrides formed into the fibrous shape in a ratio of 1 part by volume or more and 40 parts by volume or less.

2. The heat dissipating filler as claimed in claim 1, wherein the first heat conductive particles contain at least one selected from the group consisting of aluminum nitride, boron nitride and alumina.

3. The heat dissipating filler as claimed in claim 1, wherein the second heat conductive particles contain at least one selected from the group consisting of aluminum nitride, alumina and silica.

4. The heat dissipating filler as claimed in claim 1, wherein a length in a long axis direction of the aluminum nitrides formed into the fibrous shape is 1.0 µm or more and 5.0 cm or less.

5. The heat dissipating filler as claimed in claim 1, wherein a length in a short axis direction of the aluminum nitrides formed into the fibrous shape is 0.5 µm or more and 50.0 µm or less.

6. The heat dissipating filler as claimed in claim 1, wherein an aspect ratio of the aluminum nitrides formed into the fibrous shape is 2 or more and 200 or less.

7. A resin composition used for manufacturing a resin molded body made of a material containing a resin material, the resin composition comprising the heat dissipating filler as claimed in any one of claims 1 to 6.

8. The resin composition as claimed in claim 7, wherein a content of the resin material in the resin composition is 5% by volume or more and 60% by volume or less.

9. A resin molded body made of a material containing a resin material, the resin molded body comprising the heat dissipating filler as claimed in any one of claims 1 to 6.

10. The resin molded body as claimed in claim 9, wherein a content of the resin material in the resin molded body is 5% by volume or more and 60% by volume or less.

11. The resin molded body as claimed in claim 9, wherein heat conductivity of the resin molded body in each of three mutually perpendicular axial directions is 0.5 W/m·K or more and 20 W/m·K or less.

12. The resin molded body as claimed in claim 9, wherein the resin molded body has a withstand voltage of 1 kV/mm or more and 100 kV/mm or less.
